(19) Europäisches Patentamt
European Patent Office
Office européen des brevets

(11) **EP 2 116 942 A1**

(12) **EUROPEAN PATENT APPLICATION**

(43) Date of publication:
**11.11.2009 Bulletin 2009/46**

(51) Int Cl.:
***G06F 17/30*** *(2006.01)*

(21) Application number: **08008643.2**

(22) Date of filing: **08.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **SIEMENS AKTIENGESELLSCHAFT 80333 München (DE)**

(72) Inventor: **Olmino, Paolo 16151 Genua (IT)**

(74) Representative: **Fischer, Michael Siemens AG Postfach 22 16 34 80506 München (DE)**

(54) **Method for generating process duration data which is independent of a reference calendar date**

(57) Method for generating process duration data which is independent of a reference calendar date, by conversion of a given duration data set, comprised within a process description data set, in a converted duration data set, the given data set being first converted into an intermediary data set, the intermediary data set being compliant to a data format specified in the international standard ISO 8601 and comprising the following consecutive fields: a first delimiter (P), a years value (y), a years value field identifier (Y), a months value (m), a months value field identifier (Ma), a days value (d), a days value field identifier (D), a second delimiter (T), an hours value (h), an hours value field identifier (H), a minutes value (n), a minutes value field identifier (Mb), a seconds value (s), a seconds value field identifier (S), comprising the steps of creating a target data set (_m,_s) comprising a first placeholder for a converted months value (_m) and a second placeholder for a converted seconds value (_s), solving a first equation (f1(y, m)) by applying the years value (y) and the month value (m) as parameters to the equation (f1(y, m)), solving a second equation (f2(d, h, n, s)) by applying the days value (d), the hours value (h), the minutes value (n) and the seconds value (s) as parameters to the equation (f2(d, h, n, s)), replacing the first and the second placeholder with the converted months value (_m) and the converted seconds value (_s) respectively and storing the target data set (_m,_s) as the converted duration data set in the process description data set.

FIG 1

**Description**

The invention relates to a method for generating process duration data which is independent of a reference calendar date, especially by converting process durations from a format as specified in the ISO 8601 international standard for date and time representation to a modified format expressing durations solely in months and seconds.

Modelling production systems and specifying and/or altering process parameters associated with the production systems require taking into consideration durations, periodicities and differences between dates, meant as differences between a start date and an end date. Throughout this document, expressions like "2 minutes", "1 day", "1 month and two days" will be referred to as durations.

For example, in a production system, an operator needs to configure a parameter specifying that a production phase must last 1 hour. The operator may not know a start date or an end date of the production phase. In another case, the operator needs to schedule the production phase such that it starts from a precise date and time and it lasts a certain amount of time. In yet another case, recurring production phases have to be configured such that they are started at regular points in time, like for example every day at noon. In order to unify concepts like durations, time intervals and dates, the ISO 8601 standard, for example described in ISO 8601 - Wikipedia, the free encyclopedia, has been created, which advises formats of dates and time on an internationally agreed basis. In particular, the ISO 8601 standard, compared to the international standard ISO/IEC 11404:1996, which deals with durations as time intervals, describes durations as strings in one of the formats: P[y]Y[m]M[d]DT[h]H[m]M[s]S for month format or P[y]Y[w]W[d]DT[h]H[m]M [s]S for week format, e.g. "PT2M" stands for 2 minutes, "P1D" stands for 1 day and "P1M2D" stands for 1 month and 2 days. The capital letters in the formats mentioned above are used as they are, and not replaced, whereas the terms in brackets are used as placeholders for values. The detailed signification of the formats is as follows: a first delimiter P, a years value y, a years value field identifier Y, a months value m, a months value field identifier M, a weeks value w, a weeks value field identifier W, a days value d, a days value field identifier D, a second delimiter T, an hours value h, an hours value field identifier H, a minutes value m, a minutes value field identifier M, a seconds value s, a seconds value field identifier S.

For reasons of clarity, this document will use a different notation for months and minutes, being as follows: a months value m, a months value field identifier Ma, a minutes value n, a minutes value field identifier Mb.

The field of usage of the ISO 8601 format covers interoperability between systems. As an example, the markup language XML supports the ISO 8601 standard as indicated in Part 2: Data types, of the W3C Recommendation about XML schema of 02 May 2001, thus, systems using XML have to adapt to the ISO 8601 standard as well.

Database systems do not provide a native data type which conveniently translates durations in a format able to handle primitive operations in a field of durations and between dates and durations. Such operations are:

• Summation of a date and a duration

• Subtraction of one date from another date

• Summation between a first duration and a second duration

• Subtraction of one duration from another duration

Thus, the database systems have to combine existing native data types like strings and numbers to form complex combinations. A consequence is that the native data types mentioned above have to be converted into one another every time one of the primitive operations is performed. Applications using the database systems usually use non-string data formats in order to perform the primitive operations, for example:

• Fields containing a number and a unit of measurement, e.g. (2, minutes), (1, day), (32.4, day),
• A number of seconds, e.g. 120 (seconds), 86400 (seconds in a day), 2802582 (average number of seconds in a month + number of seconds in 2 days),
• A date obtained as end time, after having taken as a start date a conventional date, e.g. using the start date of 01/01/1970 00:00, a duration of 2 minutes yields 01/01/1970 00:02.

Thus, parsing or conversions to a fixed unit are needed in order to perform operations between two durations or between a duration and a date. Conversions often imply arbitrary approximations. Different kinds of anomalies are present in prior solutions.

Using numbers and units, one problem is an ambiguous approximation, meaning that a same duration can be converted into the fixed unit using different conversion types, for example, a typical format of P2Ma1D can either be (32.4373, "d") or (32, "d"). Another problem is an ambiguous unit of measurement, meaning that the same duration can be converted into different units of measurement. Taking the example above, typical formats for P2Ma1D can either be (32.4 "d") or (2802582, "s") or (1.066, "mon"). Yet another problem is a non reversibility, meaning that a number and a unit of measurement of seconds can be converted into a duration which is often different from the original, for example, (32.4, "d") can be P32.4D.

Using numbers of seconds, one problem is again the ambiguous approximation, meaning that the same duration can be converted into seconds using different conventions. A month and a year have a variable equivalent in seconds, which makes it necessary to use an average number of seconds per year or seconds per month. The average number of seconds per year is usually calculated on a 1, 4, 100 or 400 years basis. Obviously, depending on the calculation basis, different precisions are reached. For example, typical representations for P2M1D can either be 2802582 seconds or 2764800 seconds. Another problem is again the non reversibility, meaning in this case that a number of seconds can be converted into different durations which may differ from the original, for example, 2802582 seconds can either be P32.4373D or PT2802582S.

Using dates, one problem is an ambiguous system or referencing, meaning that the same duration can be represented with different dates, depending on the referencing. Typical representations for P1M2D can either be 1900-02-01 or 1970-02-03. Another problem is again the non reversibility, meaning that a date can be converted into different durations, for example 1900-02-01 can be converted into P33D or P1M2D.

Thus, given the conversion problems described above and taking into account that conversions have to be carried out every time duration and date related computations have to be carried out to data set members of a database, errors cumulate, making a precise modelling of production processes and of dependencies of processes upon one another very difficult in terms of their durations and, as a consequence, their synchronisation.

One goal to be achieved is to provide a method for representing duration information in a concise and usable format from within a database and offer an ability to perform the primitive operations in a reliable way, such that said operations have predictable behaviours.

One way the goal is achieved is by providing a method for generating process duration data which is independent of a reference calendar date, by conversion of a given duration data set, comprised within a process description data set, in a converted duration data set, the given data set being first converted into an intermediary data set, the intermediary data set being compliant to a data format specified in the international standard ISO 8601 and comprising the following consecutive fields: a first delimiter, a years value, a years value field identifier, a months value, a months value field identifier, a days value, a days value field identifier, a second delimiter, an hours value, an hours value field identifier, a minutes value, a minutes value field identifier, a seconds value, a seconds value field identifier, comprising the steps of,

> a) creating a target data set comprising a first placeholder for a converted months value and a second placeholder for a converted seconds value,
> b) solving a first equation by applying the years value and the months value as parameters to the equation, a result of the first equation yielding the converted months value,
> c) solving a second equation by applying the days value, the hours value, the minutes value and the seconds value as parameters to the equation, a result of the second equation yielding the converted seconds value,
> d) replacing the first and the second placeholder with the converted months value and the converted seconds value respectively
> e) and storing the target data set as the converted duration data set in the process description data set.

Thus, in order to host duration, a tuples is used, comprising one field containing a number of months and another field containing a number of seconds.
The main advantage of the present solution is that various ambiguities, which have been presented further above in this document, related to conversions of dates and durations, are avoided.

For reasons of clarity, throughout the description of the invention, parentheses will only be used for tuples of values, in order to point out that values or variables are to be understood as pairs in the respective context.

Features and advantages of the present invention will become more apparent from the following detailed description in conjunction with the following figures, whereby:

Figure 1    Flowchart of conversion principle from a given duration data set to a target data set (_m,_s)

Figure 2    Flowchart of conversion principle from a target duration data set (_m,_s) to an intermediary ISO 8601 duration data set

Figure 3    Flowchart of a conversion example from a target duration data set (_m,_s) to an intermediary ISO 8601 duration data set

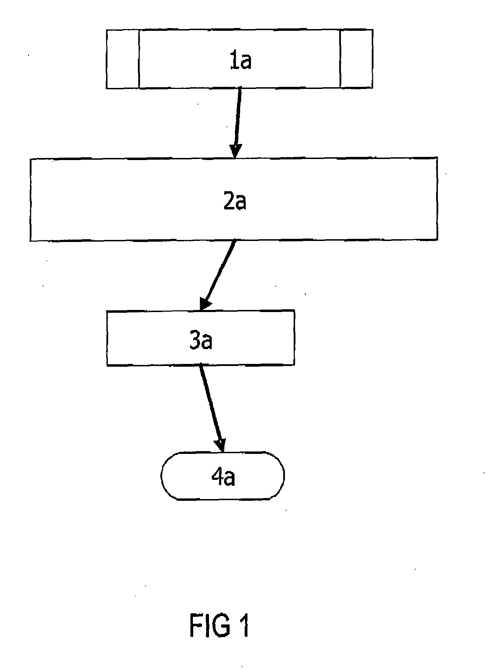

<u>Figure 1</u> shows a flowchart of conversion principle from a given duration data set to a target data set (_m,_s). First, the given duration data set is retrieved in step 1a from the database and converted to the ISO 8601 formatin step 2a, yielding the intermediary data set whose data set members are then applied to the first and the second equation, yielding the converted duration data set formed by a tuples of months and seconds values. The converted duration data set is then stored back into the database or into a memory device for immediate usage.

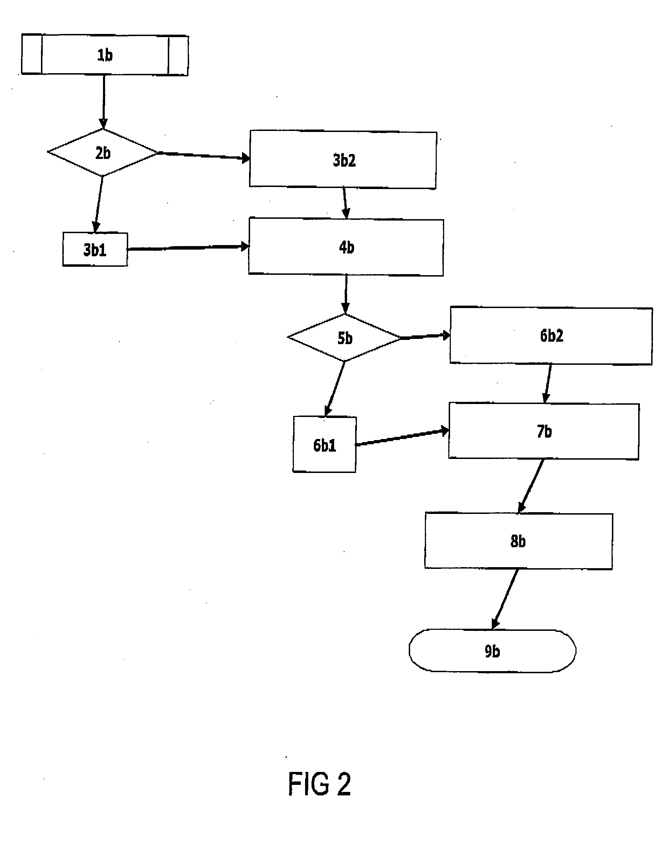

Figure 2 shows a flowchart of conversion principle from a converted duration data set ($\_m$,$\_s$) to an intermediary ISO 8601 duration data set. In step 1b, the converted duration data set ($\_m$, $\_s$) is retrieved from the database. In step 2b the converted months value $\_m$ is compared to a value of 12. If the converted months value is less than 12, the months value m is set to the converted months value $\_m$, the years value is set to 0 in step 3b1 and step 3b2 is skipped. If the converted months value $\_m$ is higher than or equal to 12, then a first integer division of $\_m$ by 12 is performed, whereby the months value m is set to a remainder and the years value y is set to an answer of the first integer division in step 3b2. In step 4b, a second integer division of the converted seconds value $\_s$ by a value of 60 is performed, whereby the seconds value s is set to a remainder of the second integer division. In step 5b, an answer of the second integer division is compared to 60. If the answer of the second integer division is less than 60, in step 6b1 the hours value is set to a value of 0, the minutes value is set to the answer of the second integer division and step 6b2 is skipped. If the answer of the second integer division is higher or equal to 60, a third integer division of the answer of the second integer division by 60 is performed and the minutes value is set to a remainder of the third integer division in step 6b2. In step 7b, a fourth integer division of the answer of the third integer division by a value of 24 is performed, whereby the hours value is set to a remainder of the fourth integer division and the days value is set to an answer of the fourth integer division. In step 8b, all results, meaning the years value y, the months value m, the days value d, the hours value h, the minutes value n and the seconds value s are converted, in other words organized, into the standard ISO 8601 format, yielding the intermediary duration data set, which, in step 9b, is stored back into the database or in a memory entity for further processing.

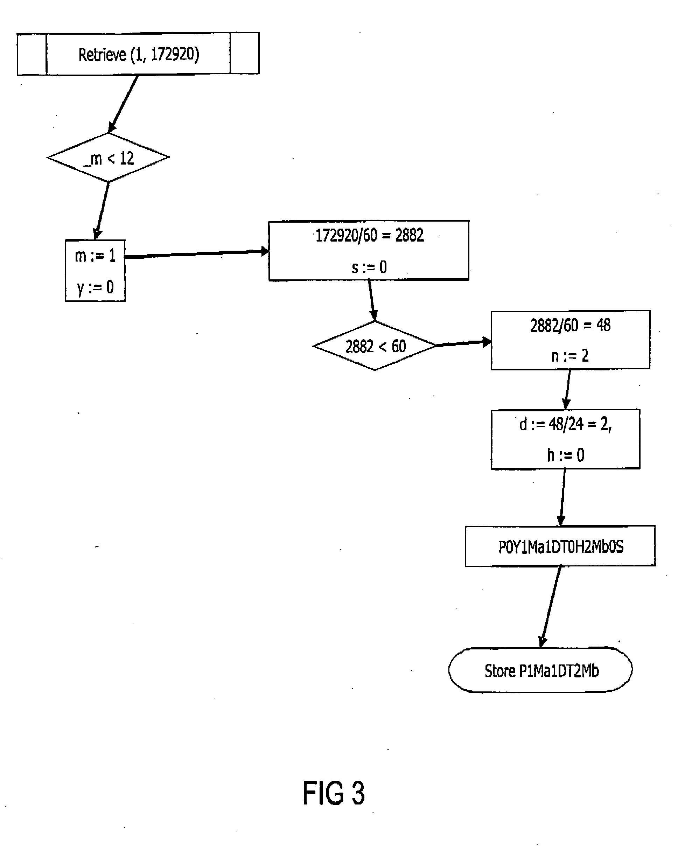

Figure 3 shows a flowchart of a conversion example for a target duration data set ($\_m$,$\_s$) to an intermediary ISO 8601 duration data set. In this example, a duration expressed in a format of the target duration data set of (1, 172920) is converted into the standard ISO 8601 duration data set format, thus, the converted months value is $\_m$ = 1 month and the converted seconds value is $\_s$ = 172920 seconds. After the set (1, 172920) has been retrieved from the database and $\_m$ is found to be less than 12, the month value is set to 1 month and the years value is set to 0. Then $\_s$ is divided by 60, yielding an answer of 2882 and a remainder of 0. Thus, the seconds value equals 0. The answer 2882 is compared to 60 and found to be less. In a next step, the answer 2882 is divided by 60 and yields an answer of 48 and a remainder of 2. Thus, the minutes value equals 2. The answer 48 is then divided by 24 and yields an answer of 2 and a remainder of 0. Thus, the days value equals 2 and the hours value equals 0. Now, all the results are converted into the standard ISO 8601 format, yielding the intermediary duration data set P0Y1Ma1DT0H2Mb0S, in other words one month, one day and two minutes. The intermediary data set is then stored into memory, optionally in a short form of the standard ISO 8601, containing only relevant, non-zero values, thus P1Ma1DT2Mb.

According to a preferred method, the result of the first equation f1(y, m), being the converted months value $\_m$, is computed by adding the months value m to a factor 12 of the years value y. In other words, in a first step, the equation f1(y,m) = $\_m$ = 12 * y + m is solved by extracting the years value y and the months value m from the intermediary data set and inserting the two values into the equation f1(y,m), the result of the first equation f1(y,m) yielding the converted months value.

In a second step, the result of the second equation f2(d, h, n, s), being the converted seconds value $\_s$, is computed according to following steps:

adding the hours value h to a factor 24 of the days value d, yielding a first interim solution,
adding the minutes value n to a factor 60 of the first interim solution, yielding a second interim solution,
adding the seconds value s to a factor 60 of the second interim solution, yielding the result of the second equation f2(d, h, n, s). In other words, the equation f2(d, h, n, s) = $\_s$ = 60 * (60 * (24 * d + h) + n) + s is solved by extracting the days value d, the hours value h, the minutes value m and the seconds value s from the intermediary data set and inserting the four values into the equation f2(d, h, n, s), the result of the second equation f2(d, h, n, s) yielding the converted months value. The first and the second step are further explained below by an example 1.

Example 1 shows a conversion from intermediary ISO 8601 duration data sets to a target data set.

- conversion of a given data set PT2Mb. A conversion to the intermediary data set is performed, yielding P0Y0Ma0DT0H2Mb0S. This step is not shown in the example. Having the intermediary data set, following associations are performed and inserted in a pair of the two equations, the first equation f1(y,m) and f2(d, h, n, s):
y=0; m=0; d=0; h=0; n=2; s=0; Inserted in the two equations, this gives:

$$f1(0,0) = \_m = 12 * 0 + 0 = 0;$$

$$f2(0,0,2,0) = \_s = 60 * (60 * (24 * 0 + 0) + 2) + 0 = 120$$

Thus, the result is a target data set (_m,_s) = (0, 120). As can be seen, the minutes value of 2 is expressed in the target data set (0, 120) in seconds.

- conversion of a given data set P1D. A conversion to the intermediary data set is performed, yielding P0Y0Ma1DT0H0Mb0S. This step is not shown in the example. Having the intermediary data set, following associations are performed and inserted in a pair of the two equations, the first equation f1(y,m) and f2(d, h, n, s): y = 0; m = 0; d = 1, h = 0; n = 0; s = 0; Inserted in the two equations, this gives:

$$f1(0,0) = \_m = 12 * 0 + 0 = 0;$$

$$f2(0,0,2,0) = \_s = 60 * (60 * (24 * 1 + 0) + 0) + 0 = 86400$$

Thus, the result is a target data set (_m,_s) = (0, 86400).
As can be seen, the days value of 1 is expressed in the target data set (0, 86400) in seconds.

- conversion of a given data set P1Y1Ma2D. A conversion to the intermediary data set is performed, yielding P0Y1Ma2DT0H0Mb0S. This step is not shown in the example. Having the intermediary data set, following associations are performed and inserted in a pair of the two equations, the first equation f1(y,m) and f2(d, h, n, s): y = 1; m = 1; d = 2, h = 0; n = 0; s = 0; Inserted in the two equations, this gives:

$$f1(0,0) = \_m = 12 * 1 + 1 = 13;$$

$$f2(0,0,2,0) = \_s = 60 * (60 * (24 * 2 + 0) + 0) + 0 = 172800$$

Thus, the result is a target data set (_m,_s) = (13, 172800). The days value of 2 is expressed in the target data set (13, 172800) in seconds and the years value is expressed in months.
According to a preferred method, the converted duration data set is adapted to be used in a database management system for at least following operations: a summation of the converted months value _m and the converted seconds value _s to a date, a summation of a first converted months value _m1 and a first converted seconds value _s1 belonging to a first converted duration data set _m1,_s1 to a second converted months value _m2 and a second converted seconds value _s2 belonging to a second converted duration data set _m2,_s2 respectively, a subtraction of the first converted months value _m1 and the first converted seconds value _s1 from the second converted months value _m2 and the second converted seconds value _s2 respectively. The summation of the first converted duration data set _m1,_s1 to the second converted duration data set _m2,_s2 as well as the subtraction of the first a first converted duration data set _m1,_s1 from the second converted duration data set _m2,_s2 are further explained below by an example 2.
A summation of two converted data sets is performed as follows:

$$(\_m1, \_s1) + (\_m2, \_s2) = (\_m1 + \_m2, \_s1 + \_s2)$$

A subtraction between two converted data sets is performed as follows:

$$(\_m2, \_s2) - (\_m1, \_s1) = (\_m2 - \_m1, \_s2 - \_s1)$$

Example 2:

A summation of (0, 120) to (1, 172800) yields
(0 + 1, 172800 + 120) = (1, 172920)
A subtraction of (1, 172800) - (0, 86400) yields
(1 - 0, 172800 - 86400) = (1, 86400)
As example 2 shows, an advantage of the present method is that arithmetic operations are simple, thus increasing speed of computations in systems implementing the method, as opposed to the prior art, **characterized in that** all variables like y, m, d, etc.. had each to first be converted in order to be used in arithmetic operations.
According to a preferred method, the converted months value $\_m$ is stored in an integer data format and the converted seconds value $\_s$ is stored in a floating point data format. The target month value, as it is restricted to describe either months or years, only needs integral numbers because smaller time portions than a month are described in days, hours, minutes and seconds. The converted seconds value however uses a floating point type in order to advantageously account for time sensitive processes, requiring sub-second accuracies.
According to a preferred method, the converted months value $\_m$ and the converted seconds value $\_s$ of the converted duration data set $\_m,\_s$ comprised in the process description data set is converted to the intermediary data set by following the steps of:

a1) performing a first integer division, whereby the converted months value $\_m$ is divided by 12,
a2) an answer of the first integer division is stored as the years value y and a remainder of the first integer division is stored as the months value m,
a3) performing a second integer division, whereby the converted seconds value $\_s$ is divided by 60,
a4) an answer of the second integer division is stored as a minutes subtotal and a remainder of the second integer division is stored as the seconds value s,
a5) performing a third integer division, whereby the minutes subtotal is divided by 60,
a6) an answer of the third integer division is stored as an hours subtotal and a remainder of the second integer division is stored as the minutes value n,
a7) performing a fourth integer division, whereby the hours subtotal is divided by 60,
a8) an answer of the fourth integer division is stored as the days value d and a remainder of the second integer division is stored as the hours value h,
a9) creating the intermediary data set by writing the first delimiter P and appending the years value y, the years value field identifier Y, the months value m, the months value field identifier Ma, the days value d, the days value field identifier D, the second delimiter T, the hours value h, the hours value field identifier H, the minutes value n, the minutes value field identifier

Mb, the seconds value s and the seconds value field identifier S. This advantageously allows interoperability to higher layer applications, such as graphical user interfaces used for configuration of product chains and product processes, by providing process duration data in a format compatible to the said higher layer applications.
A module for implementing the method comprises software code, the software code being adapted to be used as a plug-in, the plug-in being importable into database software systems. Advantageously, a flexible possibility of using the method described herein is to incorporate the method in a plug in, the plug in being loadable by a data management system and/or a process modelling software whenever it is needed without having to recompile the said software systems.
Another module for implementing the method comprises a software library, the software library being adapted to be included into a code base of database software systems. Typically, an implementation of the method in a computer program is realized by using for example a dynamic link library which is included into the code of a database management system and compiled together with the said code.
The present invention makes it possible to handle durations in a precise, reproducible way. It eliminates overhead and approximation problems, as well as allows fast arithmetical operations like summation without having to perform conversions every time an operation has to be carried out. This aspect has the further advantage that it avoids accumulation of conversion errors and/or approximations which, in prior art systems, occur due to numerous back and forth conversions. Another advantage lies in storage size reduction, as each converted data set only requires and integer and a floating point storage place, whereas intermediary data sets require several character and variable storage places, this aspect further having the advantage that database access is optimized in terms of speed.

List of Abbreviations

| | |
|---|---|
| P = | first delimiter |
| y = | years value |
| Y = | years value field identifier |
| m = | months value |
| Ma = | months value field identifier |
| d = | days value |
| D = | days value field identifier |
| T = | second delimiter |
| h = | hours value |
| H = | hours value field identifier |
| n = | minutes value |
| Mb = | minutes value field identifier |
| s = | seconds value |
| S = | seconds value field identifier |
| (_m,_s) = | target duration data set |
| _m = | converted months value |
| _s = | converted seconds value |
| f1(y, m) = | first equation |
| f2(d, h, n, s) = | second equation |
| 1a = | retrieve given duration data set |
| 2a = | convert given duration data set to ISO form PyYmMdDThHnMsS |
| 3a = | apply the first and the second equation |
| 4a = | store the converted duration data set |
| 1b = | retrieve the converted duration data set |
| 2b = | is _m less than 12? |
| 3b1 = | set m = _m |
| 3b2 = | first integer division of _m by 12. set m to the remainder of the first integer division and y to the answer of the first integer division |
| 4b = | second integer division of _s by 60. set s to the remainder of the second integer division |
| 5b = | is the answer of the second integer division less than 60? |
| 6b1 = | set h to zero, set the minutes value to the answer of the second integer division |
| 6b2 = | third integer division of the answer of the second integer division by 60. set n to the remainder of the third integer division |
| 7b = | fourth integer division of the answer of the third integer division by 24. set h to the remainder of the fourth integer division and d to the answer of the fourth integer division. |
| 8b = | convert y, m, d, h, n, s to the ISO 8601 standard |
| 9b = | store result of conversion to the ISO 8601 standard PyYmMdDThHnMsS |

**Claims**

**1.** Method for generating process duration data which is independent of a reference calendar date, by conversion of a given duration data set, comprised within a process description data set, in a converted duration data set, the given data set being first converted into an intermediary data set, the intermediary data set being compliant to a data format specified in the international standard ISO 8601 and comprising the following consecutive fields: a first delimiter (P), a years value (y), a years value field identifier (Y), a months value (m), a months value field identifier (Ma), a days value (d), a days value field identifier (D),a second delimiter (T), an hours value (h), an hours value field identifier (H), a minutes value (n), a minutes value field identifier (Mb), a seconds value (s), a seconds value field identifier (S), comprising the steps of,

a) creating a target data set (_m,_s) comprising a first placeholder for a converted months value (_m) and a second placeholder for a converted seconds value (_s),
b) solving a first equation (f1(y, m)) by applying the years value (y) and the months value (m) as parameters to the equation (f1(y, m)), a result of the first equation (f1(y, m)) yielding the converted months value (_m),

c) solving a second equation ($f2(d, h, n, s)$) by applying the days value (d), the hours value (h), the minutes value (n) and the seconds value (s) as parameters to the equation ($f2(d, h, n, s)$), a result of the second equation ($f2(d, h, n, s)$) yielding the converted seconds value ($\_m$),

d) replacing the first and the second placeholder with the converted months value ($\_m$) and the converted seconds value ($\_s$) respectively

e) and storing the target data set ($\_m,\_s$) as the converted duration data set in the process description data set.

2. Method according to claim 1, whereby the result of the first equation ($f1(y, m)$), being the converted months value ($\_m$), is computed by adding the months value (m) to a factor 12 of the years value (y).

3. Method according to claim 1, whereby the result of the second equation ($f2(d, h, n, s)$), being the converted seconds value ($\_s$), is computed according to following steps:

1) adding the hours value (h) to a factor 24 of the days value (d), yielding a first interim solution,
2) adding the minutes value (n) to a factor 60 of the first interim solution, yielding a second interim solution,
3) adding the seconds value (s) to a factor 60 of the second interim solution, yielding the result of the second equation ($f2(d, h, n, s)$).

4. Method according to one of the preceding claims, whereby the converted duration data set is adapted to be used in a database management system for at least following operations: a summation of the converted months value ($\_m$) and the converted seconds value ($\_s$) to a date, a summation of a first converted months value ($\_m1$) and a first converted seconds value ($\_s1$) belonging to a first converted duration data set ($\_m1,\_s1$) to a second converted months value ($\_m2$) and a second converted seconds value ($\_s2$) belonging to a second converted duration data set ($\_m2,\_s2$) respectively, a subtraction of the first converted months value ($\_m1$) and the first converted seconds value ($\_s1$) from the second converted months value ($\_m2$) and the second converted seconds value ($\_s2$) respectively.

5. Method according to one of the preceding claims, whereby the converted months value ($\_m$) is stored in an integer data format and the converted seconds value ($\_s$) is stored in a floating point data format.

6. Method according to one of the preceding claims, whereby the converted months value ($\_m$) and the converted seconds value ($\_s$) of the converted duration data set ($\_m,\_s$) comprised in the process description data set is converted to the intermediary data set by following the steps of:

a1) performing a first integer division, whereby the converted months value ($\_m$) is divided by 12,
a2) an answer of the first integer division is stored as the years value (y) and a remainder of the first integer division is stored as the months value (m),
a3) performing a second integer division, whereby the converted seconds value ($\_s$) is divided by 60,
a4) an answer of the second integer division is stored as a minutes subtotal and a remainder of the second integer division is stored as the seconds value (s),
a5) performing a third integer division, whereby the minutes subtotal is divided by 60,
a6) an answer of the third integer division is stored as an hours subtotal and a remainder of the second integer division is stored as the minutes value (n),
a7) performing a fourth integer division, whereby the hours subtotal is divided by 60,
a8) an answer of the fourth integer division is stored as the days value (d) and a remainder of the second integer division is stored as the hours value (h),
a9) creating the intermediary data set by writing the first delimiter (P) and appending the years value (y), the years value field identifier (Y), the months value (m), the months value field identifier (M1), the days value (d), the days value field identifier (D), the second delimiter (T), the hours value (h), the hours value field identifier (H), the minutes value (n), the minutes value field identifier (M2), the seconds value (s) and the seconds value field identifier (S).

7. Module for implementing the method according to claims 1 to 6, comprising software code, the software code being adapted to be used as a plug-in, the plug-in being importable into database software systems.

8. Module for implementing the method according to claims 1 to 6, comprising a software library, the software library being adapted to be included into a code base of database software systems.

FIG 1

**FIG 2**

FIG 3

European Patent Office

## EUROPEAN SEARCH REPORT

Application Number

EP 08 00 8643

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVIS M.: "Schema Time Changes (Draft)"[Online] 11 December 2000 (2000-12-11), pages 1-11, XP002494924 Retrieved from the Internet: URL:http://www.macchiato.com/unicode/timeI ntervals.htm> [retrieved on 2008-09-08] Canonical duration * pages 10-11 * | 1-8 | INV. G06F17/30 |
| X | "SQL Reference 10g Release 2 (10.2)" ORACLE DATABASE, December 2005 (2005-12), pages 2-18-2-23, XP002494925 INTERVAL Datatypes * pages 2-18 - pages 2-23 * | 1-8 | |
| A | DATE C J: "Defining data types in a database language-a proposal for adding data and time support to SQL" SIGMOD RECORD USA, vol. 17, no. 2, June 1988 (1988-06), pages 53-76, XP002494926 ISSN: 0163-5808 * the whole document * | 1-8 | |

TECHNICAL FIELDS SEARCHED (IPC)

G06F

The present search report has been drawn up for all claims

| Place of search | Date of completion of the search | Examiner |
|---|---|---|
| The Hague | 8 September 2008 | Denoual, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)